# EUROPEAN PATENT APPLICATION

(11) **EP 0 559 374 A1**
(43) Date of publication of application: **08.09.1993**
(21) Application number: 93301397.1
(22) Date of filing: 25.02.1993
(51) Int. Cl.: G06F 3/033

(54) **Graphic display method and apparatus for rotating an object in a three-dimensional space**

(30) Priority: 04.03.1992 JP 47303/92
(71) Applicant: International Business Machines Corporation, Armonk, N.Y. 10504 (US)
(72) Inventor: Ono, Makoto, Yokohama-shi, Kanagawa-ken (JP); Minakata, Hiroshi, Tokyo (JP)
(74) Representative: Burt, Roger James, Dr.

(57) **Abstract**

A graphic display method and apparatus to improve the ease of operations by enabling a more direct operation for rotating an object in a three-dimensional space, and to make it possible to change the attitude of the object over a wide range of viewing points is provided. A semitransparent spherical surface 22 having as its centre O a fixed point in an object 21 being displayed on a screen of a tablet is generated so as to enclose the object 21. Then, three degrees of freedom for orientation are determined by pen-manipulation on the spherical surface 22. That is, a plurality of points (P₀-P₃) on the spherical surface 22 are specified in a predetermined order. For example, a rotation axis OP₁ is specified by specification of points P₀ and P₁, and then a rotation angle α about this axis OP₁ is specified by the specification of points P₂ and P₃. Then, calculations for rotating the object 2 to the specified orientation are performed, and the rotated object 21 is displayed. According to this procedure, the object 21 in the three-dimensional space can be rotated to an arbitrary orientation in a desired manner.

## Description

The present invention relates to a method of rotating, on a graphic input apparatus, an object in a three-dimensional space to an arbitrary orientation using a two-dimensional input device such as a tablet.

An object in a three-dimensional space has a total of six degrees of freedom; three for position and three for orientation. Where a fixed point is set in an object to be processed and, therefore, the three degrees of freedom for position are determined, it is required to specify only the remaining three for orientation. This is defined as rotation of the object. The three degrees of freedom for orientation can be specified by inputting three parameters in a certain manner on a graphic input apparatus. Conventionally, these parameters are input, for example, in the form of angles with respect to the X-, Y- and Z-planes or positions in the spherical surface coordinate system. The general technique is to use, as an input means, a device through which a continuous value can be input, such as a dial or a slider.

On the other hand, the data to be input together with the above parameters, is usually based on coordinates on a graphic display, and in many cases it is input through devices such as a tablet or a mouse. Since, in this manner, a plurality of input devices are used to rotate an object in a three-dimensional space, intricate operations are required and the use of such special devices tends to increase the cost of an overall system.

Japanese Patent Application Unexamined Publication No. Sho. 61-36791 (U.S. Patent No. 4,734,690) discloses a method in which, while the position of the object to be processed is fixed, the viewing point is changed by utilizing an imaginary spherical surface enclosing the object. However, in this method, since the attitude of the object does not vary, the changing of the viewing point can provide only a limited range over which the object can be viewed.

An object of the present invention is to solve the above problems, and perform the operation of rotating an object in a three-dimensional space more directly to improve the ease of operations, and to make it possible to change the attitude of the object over a wide range of viewing points.

According to a first embodiment of the present invention there is provided a graphic system comprising an input/output section having a display means and a processing section for performing the process of rotating a figure, said graphic apparatus further comprising
a means for displaying, on said display means, a semitransparent spherical representation surface enclosing said object being displayed on said display means;
a means for specifying three degrees of freedom for the orientation of said object by specifying a plurality of points on said spherical representation surface in a predetermined order;
a means for performing a calculation for rotating said object to the orientation defined by said specified three degrees of freedom; and a means for displaying, on said display means, said object after it is subjected to the rotation based on the results of said calculation.

According to a further embodiment of the present invention there is provided a graphic system further comprising
a means for displaying, on said display means, a semitransparent spherical representation surface having as a centre O a fixed point in said object being displayed, and enclosing said object;
a means for receiving data for three degrees of freedom by specification of a plurality of points on said spherical representation surface in accordance with a predetermined specifying method;
a means for determining a rotation axis OP from among said three degrees of freedom by performing a calculation based on said received data; and
a means for determining a rotation angle α about said axis OP from among said three degrees of freedom by performing a calculation based on said received data.

According to yet a further embodiment of the present invention there is provided a graphic system claim 2 wherein
said input/output section includes a two-dimensional display screen and a means for indicating points on said display screen;
said image generating section includes a means for determining a fixed point in a three-dimensional figure being displayed on said display screen, and a means for generating a semitransparent spherical representation surface to be displayed on said display screen with said fixed point as its centre; and
said processing section includes a conversion-to-spherical representation-surface-coordinates means for converting two-dimensional coordinates on said semitransparent spherical representation surface that are indicated through said input/output section into spherical surface coordinates, a polar coordinates calculating means and axial rotation angle calculating means for determining three degrees of freedom for rotation based on said spherical surface coordinates by performing a calculation, and a projection converting means for determining the attitude of said figure after it is subjected to said rotation based on said three degrees of freedom.

According to a still further embodiment of the present invention there is provided a graphic system wherein
said input/output means further includes a means for displaying, on said display screen, a predetermined specifying method for indicating said points on said display screen.

According to another embodiment of the present invention there is provided a graphic system wherein
said input/output section further includes a means for changing over between a plurality of modes of operation;
said image generating section further includes a figure processing section for generating, in said image generation mode, said three-dimensional figure based on input data and a memory section for storing data of said three-dimensional figure, and determines, in said figure rotation mode, said fixed point in said three-dimensional figure based on said data for said three-dimensional figure.

According to yet another embodiment of the present invention there is provided a graphic system wherein said plurality of modes of operation includes an image generation mode and a figure rotation mode.

According to another aspect of the present invention there is provided a method of rotating an object in a three-dimensional space by specifying data for three degrees of freedom for orientation of the object displayed on a display means, characterized by the steps of
displaying, on said display means, a semitransparent spherical representation surface enclosing said object being displayed;
inputting data for said three degrees of freedom for said orientation of said object by specifying a plurality of points on said spherical representation surface in accordance with a predetermined specifying method;
performing a calculation for rotating said object to said orientation defined by said three degrees of freedom; and
displaying, on said display means, said object after it is subjected to the rotation based on the results of said calculation.

According to a further aspect of the present invention there is provided a method wherein said step of inputting said data for said three degrees of freedom for said orientation comprises the steps of
specifying two of said three degrees of freedom by successively specifying two points on said spherical representation surface; and
specifying the remaining one of said three degrees of freedom by specifying, after a lapse of a certain period, another two points on said spherical representation surface.

According to a yet further aspect of the present invention there is provided a method wherein said step of inputting said data for said three degrees of freedom for said orientation comprises the steps of
specifying an axis OP for said rotation by specifying one point on said spherical representation surface; and
specifying a rotation angle α about said axis OP by specifying two points on said spherical representation surface.

According to a still further aspect of the present invention there is provided a method wherein said step of inputting said data for said three degrees of freedom for said orientation comprises the steps of
displaying said predetermined specifying method on said display means; and
specifying said three degrees of freedom by interactive input in accordance with said specifying method.

According to yet another aspect of the present invention there is provided a method comprising the steps of
determining a fixed point in said object being displayed;
generating and displaying a semitransparent spherical representation surface having said fixed point as the centre O and enclosing said object being displayed;
inputting data for determining a rotation axis OP from among said three degrees of freedom by specifying points on said spherical representation surface in accordance with a predetermined method, and inputting data for a rotation angle α about said axis OP from among said three degrees of freedom by specifying other points on said spherical representation surface; and
performing a calculation for rotating said object to the orientation defined by said three degrees of freedom that are determined by said input data.

According to an embodiment of the invention, a fixed point in a displayed object is determined, and a semitransparent spherical representation surface is then provided that has the fixed point as its centre and encloses the object. Then, on this spherical surface, a plurality of points for determining the three degrees of freedom for orientation are specified in a predetermined order. As a result of such specification of points, for example, a rotation axis and then a rotation angle about this axis are specified. Then, a calculation for rotating the object to the specified orientation is performed, and the rotated object is displayed. In this manner, an object in a three-dimensional space can be rotated to an arbitrary orientation in a desired manner.

In order that the present invention may be fully understood a preferred embodiment thereof will now be described with reference to the accompanying drawings in which:

Figure 1 illustrates schematically a graphic input apparatus according to an embodiment of the present invention.

Figure 2 illustrates an example of a display picture in an input/output section of Fig. 1.

Figure 3 illustrates a flowchart outlining a procedure for rotating an object in the apparatus of Figure 1.

Figure 4 illustrates how the rotation is specified according to the procedure of Figure 3.

Figure 5 illustrates a flowchart outlining a procedure for automatically judging the specified components of the degree of freedom for rotation.

Figure 6 illustrates a flowchart outlining details of a process performed in association with input of polar coordinates of Figure 5.

Figure 7 illustrates the polar coordinates to be input in the process of Figure 6.

Figure 8 illustrates a flowchart outlining details of a process performed in association with an input of an axial rotation angle of Figure 5.

Figure 9 illustrates the axial rotation angle to be input in the process of Figure 8.

Figure 10 illustrates a flowchart outlining a procedure for specifying the components of the degree of freedom for rotation through menu selection.

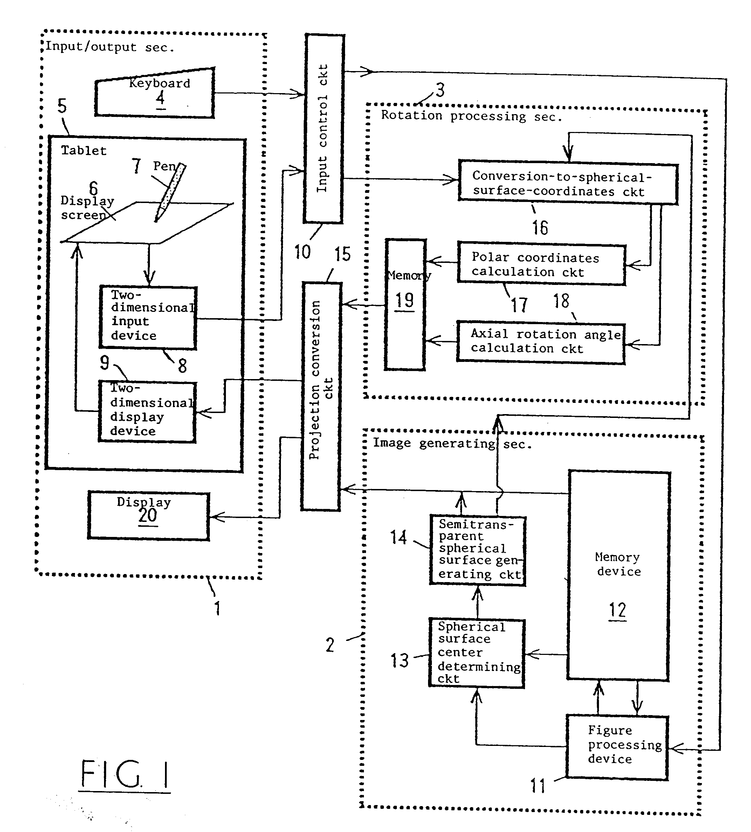

Referring to Figure 1, there is shown a configuration of a graphic input apparatus according to an embodiment of the present invention. In Fig. 1, reference numeral 1 represents an input/output section; 2, an image generating section; and 3, a figure rotation processing section. The input/output section 1 includes a keyboard 4 and a tablet 5 which are used for inputting character and numerical information, and its operation mode can be changed between an image generation mode and a figure rotation mode in receiving such information. Positional information (x, y) that has been indicated by the user with a pen 7 on a display screen 6 of the tablet 5 is input to the image generating section 2 and to the rotation processing section 3 via a two-dimensional input device 8. Meanwhile, the processing results of the image generating section 2 and the rotation processing section 3 are provided to the display screen 6 via a two-dimensional display device 9. Reference numeral 10 denotes an input control circuit that provides the input information to the image generating section 2 or to the rotation processing section 3 in accordance with the input mode. The image generating section 2 includes a figure processing device 11 for generating, in the image generation mode, a three-dimensional figure based on the positional input information from the user, and a memory device 12 for storing the data (X, Y, Z) of this figure. The image generating section 2 further includes a circuit 13 for determining, in the figure rotation mode, the centre of a semitransparent spherical surface and a circuit 14 for generating the semitransparent spherical surface to be displayed on the display screen 6.

The figure rotation processing section 3 consists of the following components a conversion-to-spherical-surface-coordinates circuit 16 which converts, during the figure rotation mode, the two-dimensional input coordinates (x, y) into spherical surface coordinates (ϑ, φ), a polar coordinates calculation circuit 17 and an axial rotation angle calculation circuit 18 which perform calculations to determine the three degrees of freedom to be used for controlling the attitude of the object in three-dimensional space. A memory 19 stores the results of the above calculations. More specifically, the polar coordinates calculation circuit 17 calculates the two rotation angle components of the polar coordinates, and the axial rotation angle calculation circuit 18 calculates the rotation angle about an axis defined by the centre of the spherical surface and a specified point on the spherical surface.

A projection conversion circuit 15 calculates the attitude of the object after it is subjected to the rotation based on the figure position data (X, Y, Z) of the object sent from the memory device 12 and the three degrees of freedom for rotation that have been calculated by the rotation processing section 3, and converts the calculation results into two-dimensional coordinates. The results are displayed on the display screen 6 by the two-dimensional display device 9. If necessary, the results are also output to an external output devices such as a display 20 or a printer.

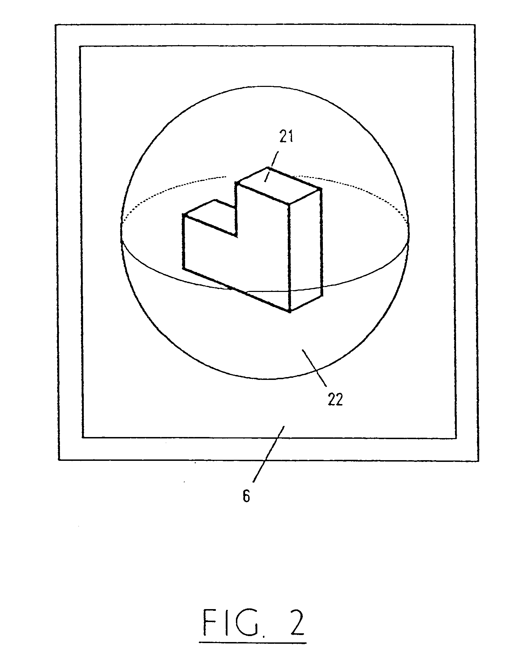

In Figure 2 there is shown a display example of the display screen 6 of tablet 5. Reference numeral 21 represents an object in three-dimensional space to be subjected to the rotation operation, and numeral 22 represents a semitransparent spherical surface that is displayed in the figure rotation mode so as to enclose the object 21.

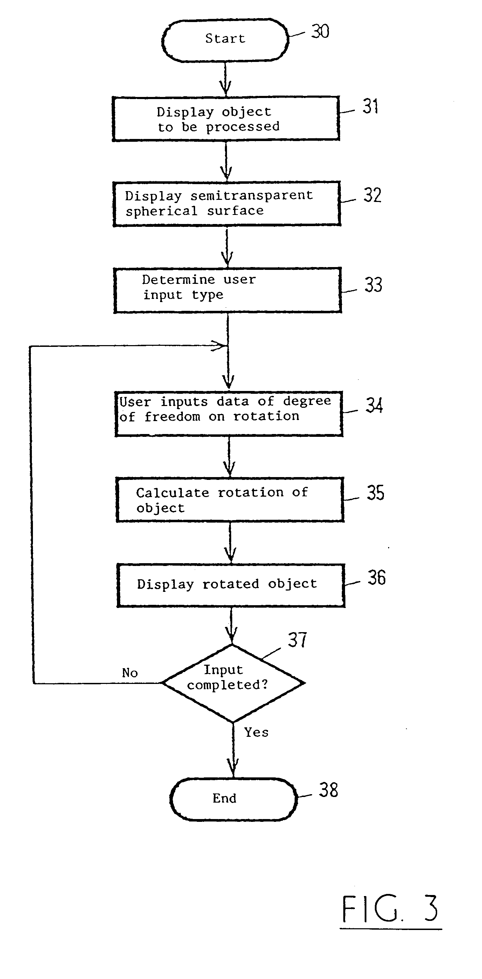

Figure 3 outlines a procedure for rotating an object in three-dimensional space in the figure rotation mode. First, the data of the three-dimensional figure of the object 21 to be processed, that has been generated in the image generating section 2 in the image generation mode, is read out and displayed on the display screen 6 (step 31). Then, the semitransparent spherical surface 22 is superimposed on the figure of the object 21 (step 32). Then, the type of user input for the rotation operation is determined (step 33), which can, for example, be a method of automatically judging a specified component based on input using a pen 7 (automatic judgment) or a method of explicit specification by the user. Automatic judgment is desirable in order to improve the ease of operations. Then, the user inputs the data necessary for the rotation operation (step 34). Finally, the figure after it is subjected to the rotation is calculated (step 35), and displayed on the display screen 6 (step 36).

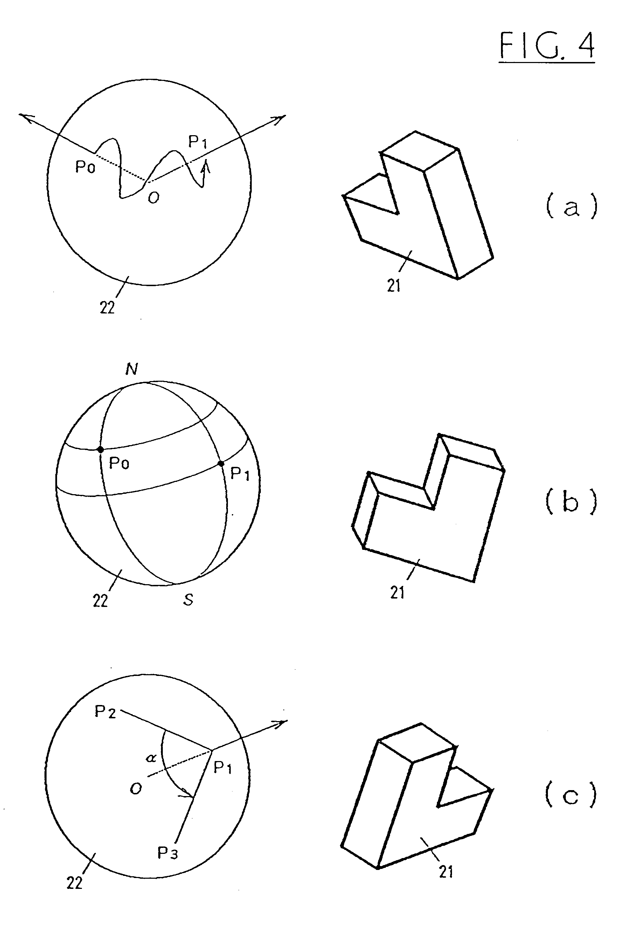

The data to be input by the user for the rotational operation includes components for the surface coordinates (i.e., polar coordinates) and a component for the rotation angle about an axis. As shown in Figure 4(a), the polar coordinates are specified by moving a point P on the spherical surface 22 from P₀ to P₁ to rotate the object 21 together with the spherical surface 22. In this process, since one degree of freedom, that is the rotation about an axis defined by the centre O of the spherical surface 22 and the point P₀ or P₁ on the spherical surface 22, still remains to be determined, the directions (N-S) of meridian lines before and after the movement are hypothetically made constant, i.e., their initial values are maintained, as shown in Figure 4(b). Then, as shown in Fig. 4(c), a rotation angle α about the axis (O-P₁) after the movement is specified by determining points P₂ and P₃. Interactive data input operations are repeated until the user's desired state is attained (step 37). Where points P₀ and P₁ are the same point on the spherical surface 22, the object rotates about the axis (O-P₀) by the rotation angle a by specifying point P₀ and then determining points P₂ and P₃.

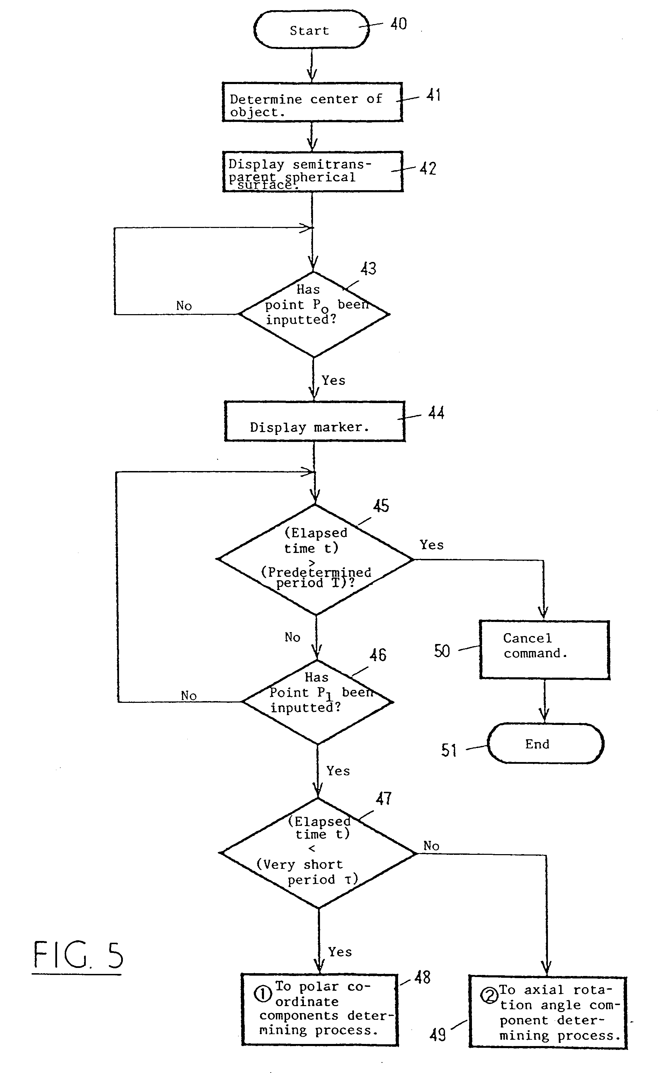

Referring to Figures 5-9, the procedures for specifying the respective three degrees of freedom for rotation are described below in detail. Figure 5 shows the case of automatically judging the specified components.

The centre position of the object 21 being displayed on the screen 6 is automatically determined as a fixed point by the spherical surface centre determining circuit 13 (step 41). If the user wants to select a point other than the object centre as the fixed point, he can specify such a point separately. After the determination of the fixed point of the object 21, the semitransparent spherical surface 22, having the fixed point as its centre O, is generated by the semitransparent spherical surface generating device 14, and is displayed on the display screen 6 in superposition on the object (step 42). The display of the semitransparent spherical surface is performed by modifying the display data for all the original pixels by a calculation using an alpha buffer in writing the data of the respective pixels of the spherical surface 22 into a frame buffer. Alternatively, it can be performed more readily by a "pixel-thinning" method in which the data of all the original pixels are rewritten every second pixel and the remaining pixel data not rewritten are left as they are.

The user specifies one point on the spherical surface 22 displayed on the display screen 6 using the pen 7 (step 43). The two-dimensional coordinates (x, y) of this point are input to the conversion-to-spherical-surface-coordinates circuit 16 via the two-dimensional input device 8, and therein converted into the following three-dimensional coordinates of the point P0 on the imaginary spherical surface 22:$\text{P₀ = (cosϑcosφ, sinφ, sinϑcosφ).}$

Since the spherical surface 22 being displayed is not a figure defined by the user, but is a figure generated by the image generating section 2, the conversion-to-spherical-surface-coordinates circuit 16 can readily calculate the three-dimensional position of P₀.

A marker as a cue for future operations is displayed at the position of P0 that has been input (step 44). Depending upon an instruction from the user, an axis connecting the centre O of the spherical surface 22 and the first-input point P₀ is also displayed.

It is automatically judged whether the user is going to input the polar coordinates or the axial rotation angle described above, and the judgment result is registered in the apparatus in advance. For example, such judgment is automatically performed in the following manner in accordance with the user's operation of moving the pen 7 on the spherical surface 22.
(A) If another point P₁ is input immediately after the first point P₀, more specifically, if another point P₁ is input within a predetermined period T and further within a very short period τ from the input of the first point P₀ (step 45-47), it is judged that polar coordinates are going to be input (step 48).
(B) If another point P₁ is input within a relatively short period from the input of the first point P₀, more specifically, if another point P₁ is input within the predetermined period T but after a lapse of the very short period τ it is judged that an axial rotation angle is going to be input (step 49).
(C) No input within the predetermined period T is regarded as a cancel operation. In this case, the first marker is deleted (step 50), and the process returns to the initial state.

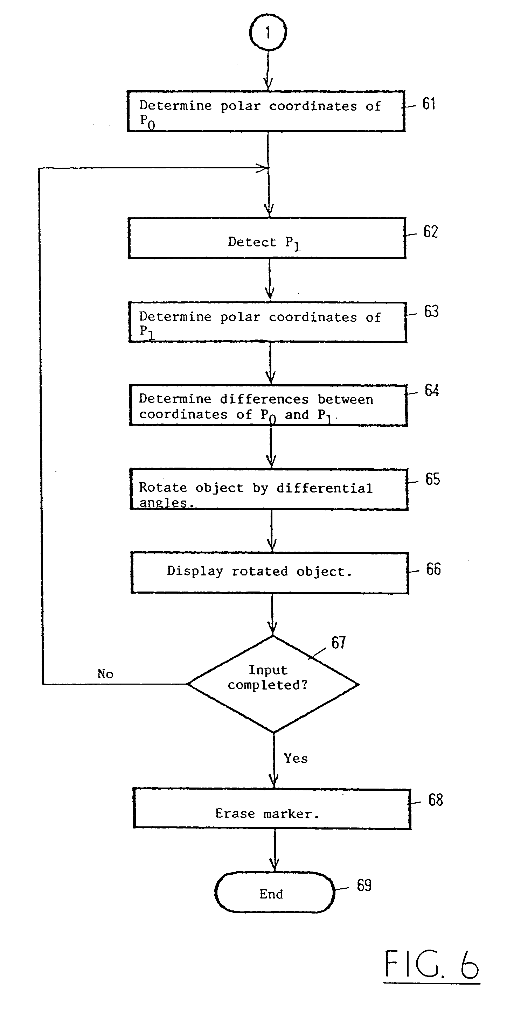

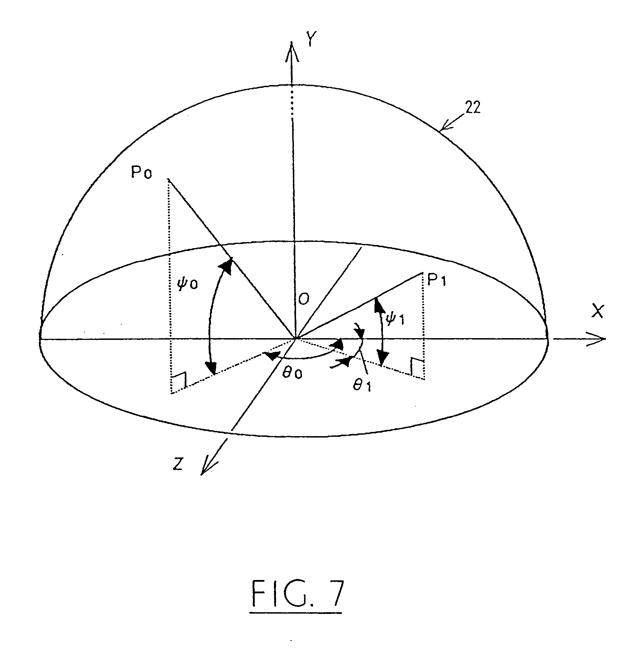

Referring to Figure 6 there is shown a procedure to be performed in response to input of the polar coordinates (step 48). This process is described below in conjunction with reference to Figure 7.

The polar coordinates (ϑ₀, ψ₀) of the point P₀ being displayed on the spherical surface 22 are determined from its three-dimensional coordinates (step 61). The polar coordinates (ϑ₀, ψ₀) of the final input position P₁ of a continuous trace having been made by the user on the spherical surface 22 using the pen 7 (step 63) are determined. Then, the differences between the coordinates of P₀ and P₁, i.e., (ϑ₁ - ϑₒ) and (ψ₁ - ψ₀), are determined the coordinates of P₀ and P₁, i.e., (ϑ₁ - ϑₒ) and (ψ₁ - ψ₀), are determined (step 64). These differences correspond to the variation of the attitude of the object 21 and from its initial state. The attitude of the object after it is subjected to rotation is obtained by adding this relative movement to its initial orientation. This calculation is performed by the projection conversion circuit 15 in the manner as described below, and the calculation results are stored in a memory (not shown) and displayed on the display screen 6 (step 65 and 66). In this manner, the user can rotate the object 21 to a desired orientation. Since points P₀ and P₁ can be specified by the simple operation of freely moving the pen 7 on the spherical surface 22, the user can rotate the object 21 to an arbitrary orientation as desired. Upon completion of the input, the marker that was indicated at the first stage is erased, and the process returns to the initial state (step 67-69).

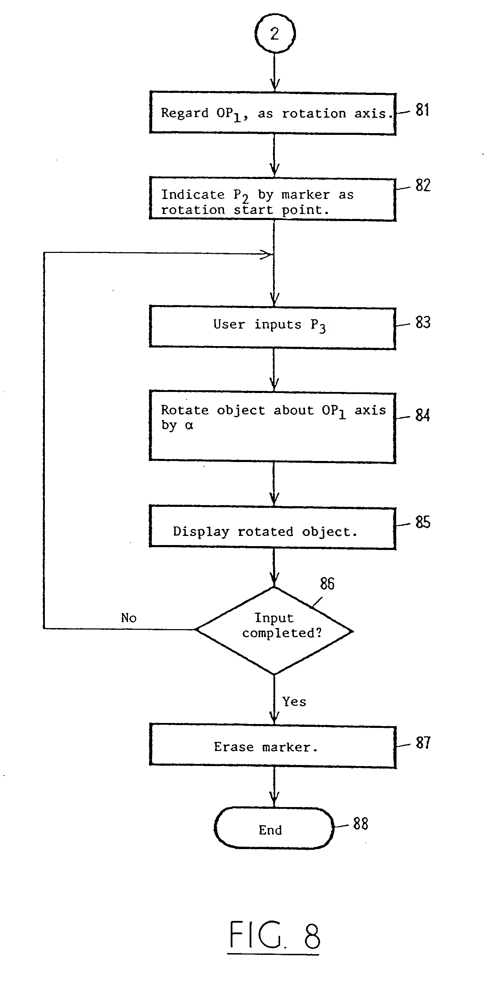

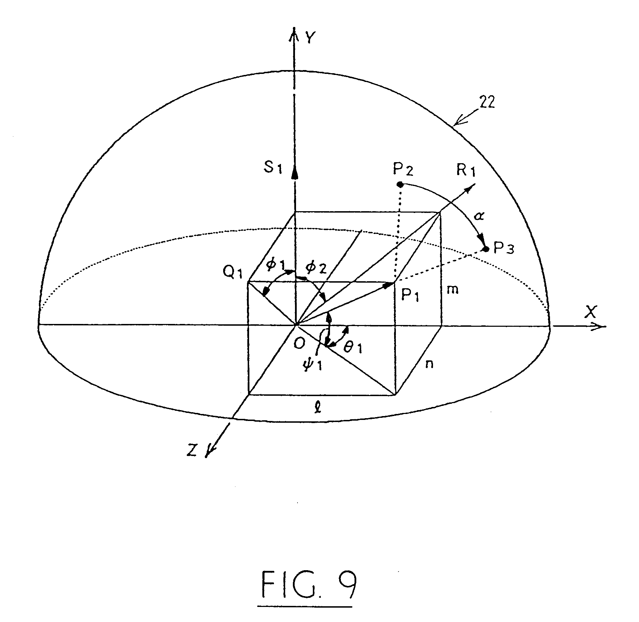

In Figure 8 there is shown a procedure for the operation of inputting the axial rotation angle, as mentioned in step 49 of Figure 5, i.e., the operation of specifying a value for the remaining one degree of freedom in the form of axial rotation. This process is described below in conjunction with reference to Figure 9.

A line segment OP₁ connecting the point P₁, which has already been input, and the centre O of the imaginary spherical surface 22 is regarded as the rotation axis (step 81). Then, a point P₂, on the spherical surface 22, which is input by the user is indicated by a marker as the rotation start point (step 82). The user moves the pen 7 from the start point P₂ in the direction of the desired rotation and then specifies another point P₃ on the spherical surface 22, so that the angle P₂P₁P₃ defines a rotation angle α about the axis OP₁ (step 83-84). The axial rotation angle α is calculated by the axial rotation angle calculation circuit 18, the attitude of the object 21 after it is subjected to the rotation is calculated by the projection conversion circuit 15, and the calculation results are displayed on the display screen 6 (step 85). By repeating the above operations, the user can rotate the object 21 in the desired direction (step 86). Upon completion of the input, the marker that was indicated at the first stage is erased, and the process is finished (step 87 and 88).

The coordinate conversion calculations performed by the projection conversion circuit 15, the polar coordinates calculation circuit 17 and the axial rotation angle calculation circuit 18 are described below. Conversion between coordinates is performed using vectors and matrices. To simplify the discussion, a conversion matrix T_{A} is described that is used in the axial rotation angle calculation circuit 18 to perform the rotation of the angle α about the axis OP₁ starting from the point P₂.

Referring to Figure 9, letting 1, m and n respectively represent the x, y and z components of a unit vector in the direction of the rotation axis O-P₁, the following equations are obtained:$\text{(1) tanϑ₁ =} \text{n/l}$$\text{(2) tanψ₁ =} \text{ml} \text{/} \sqrt{\text{l} \text{² +} \text{n} \text{²}}$$\text{(3)} \text{l} \text{²+} \text{m} \text{²+} \text{n} \text{² =} \text{l}$

Using equations (1) - (3), one can obtain:$\text{(l, m, n) = (cosϑ₁cosφ₁, sinφ₁, sinϑ₁cosφ₁)}$

OQ₁ is the vector obtained by projecting the vector OP₁ onto the Y-Z plane, and φ₁ is the angle formed by the vector OQ₁ and the Y-axis. Vectors OR₁ and OS₁ are obtained by rotating the respective vectors OP₁ and OQ₁ about the X-axis by an angle of -φ₁. A conversion matrix T₁ describing this relationship is:

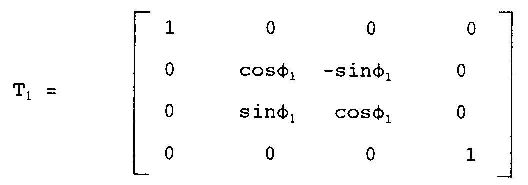

In this manner, the vector OS₁ along the Y-axis and the vector OR₁ in the X-Y plane are obtained using the conversion matrix T₁.

φ₂ is the angle formed by the vector OR₁ and the Y-axis. If the vector OR₁ is rotated by φ₂ about the Z-axis, it becomes coincident with the Y-axis. This relationship is described by the following conversion matrix T₂:

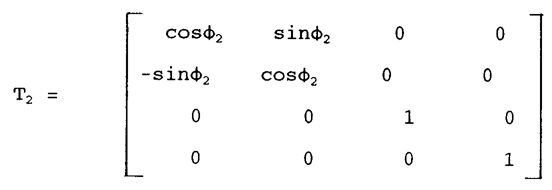

A conversion matrix T₃ for the rotation of the angle α (= P₂P₁P₃) about the Y-axis is:

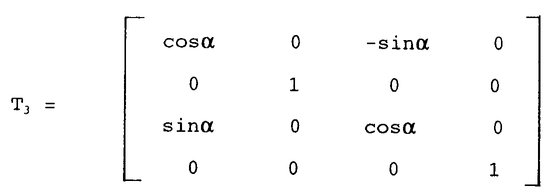

Further, conversion matrices T₁' and T₂' are obtained by subjecting the respective conversion matrices T₁ and T₂ to inverse conversion.

Therefore, a conversion matrix T_{A} for rotating a point P₂ about an axis of OP₁ by the angle α is:${\text{T}}_{\text{A}} \text{= T₁T₂T₃T₂'T₁'}$
where$\text{cosφ₁ =} \text{m} \text{/} \sqrt{\text{l} \text{² +} \text{n} \text{²}} \text{, sinφ₁ =} \text{n} \text{/} \sqrt{\text{l} \text{² +} \text{n} \text{²}}$$\text{cosφ₂ =} \text{l/} \sqrt{\text{l} \text{² +} \text{m} \text{₂}} \text{, sinφ₂ =} \text{m} \text{/} \sqrt{\text{l} \text{² +} \text{m} \text{²}}$

Since l, m and n are functions of ϑ₁ and φ₁, the conversion matrix T_{A} can be expressed as a function of ϑ₁, φ₁ and the rotation angle α only. The conversion matrix T_{A} to be used in the axial rotation angle calculation circuit 18 is thus determined.

In a similar manner, the conversion matrix T_{B} to be used in the polar coordinates calculation circuit 17 can be expressed as a function of ϑ₀, φ₀, ϑ₁ and φ₁ shown in Figure 7.

If the projection conversion circuit 15 employs a perspective projection method, a conversion matrix T_{c} in that circuit is expressed as follows: 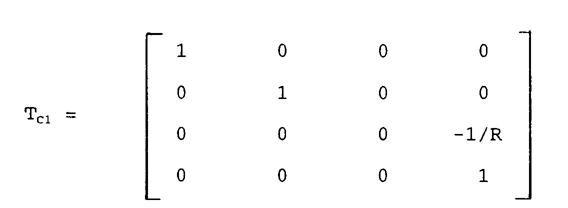
where the Z-axis is taken as the viewing axis and the point Z = R is taken as the projection centre. Furthermore, if a parallel projection method is employed, the conversion matrix becomes:

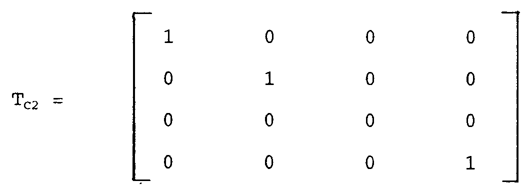

Either T_{c1} or T_{c2} may be employed as the conversion matrix T_{c}. Finally, a two-dimensional output P' (x, y) that is to be used when the two-dimensional display device 9 produces a picture on the display screen 6 is obtained by multiplying together the three-dimensional coordinates of each point P (P₀-P₃) on the imaginary spherical surface 22 and the conversion matrices of the projection conversion circuit 15, the polar coordinates calculation circuit 17 and the axial rotation angle calculation circuit 18:${\text{P' = PT}}_{\text{A}} {\text{T}}_{\text{B}} {\text{T}}_{\text{C}}$

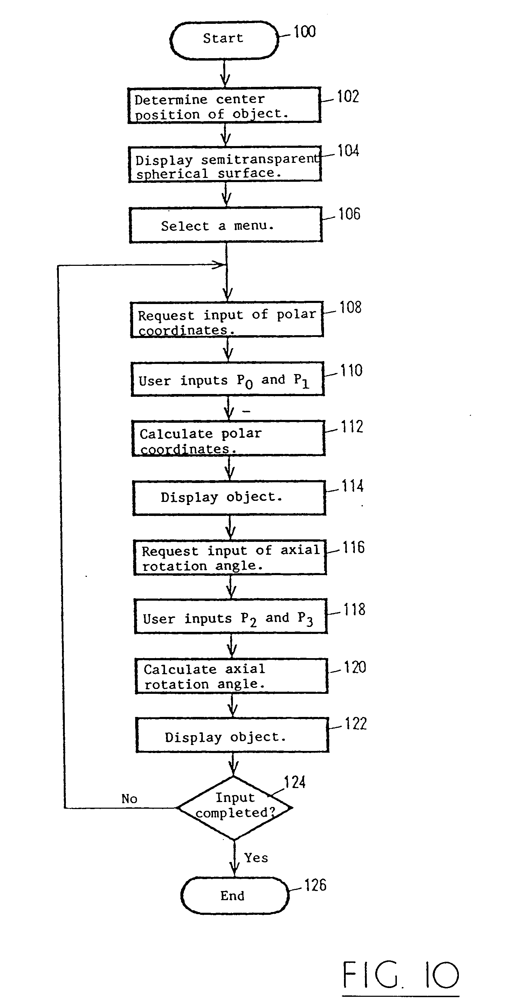

In Figure 10 there is shown another procedure for specifying the components of the degree of freedom for rotation, i.e., a procedure in which the user explicitly inputs parameters through menu selection. In this embodiment, menu pictures for input are displayed on the display screen 6, and the user specifies the components of the degree of freedom for rotation in an interactive manner through menu selection. The inputting of the polar coordinates (step 108-110) and the axial rotation angle (step 116-118) can be performed by sequentially specifying respective points P (P₀-P₃) on the imaginary spherical surface 22 according to messages to be displayed on the display screen 6. Since the inputting is performed according to menu selection, it is not necessary to automatically judge the input order. The inputting of the polar coordinates and the axial rotation angle may be interchanged. Since the projection conversion circuit 15, the polar coordinates calculation circuit 17 and the axial rotation angle calculation circuit 18 operate in the same manner as in the previous embodiment, a description therefor is omitted here. The input method of the present embodiment is suitable for users who are not accustomed to the input operation because of the clearness of the order of specifying the components.

It will be apparent to one skilled in the art that notwithstanding any specific embodiment of the invention described above referring to rotation of an object, the system could equally be utilised to either scale or translate the object by specifying the second point, P₁, to be outside the boundary of the sphere and distinguish the required operation by reference to the time periods τ and T above.

## Claims

**(1)** A graphic system comprising an input/output section having a display means and a processing section for performing the process of rotating a figure, said graphic apparatus further comprising
a means for displaying, on said display means, a semitransparent spherical representation surface enclosing said object being displayed on said display means;
a means for specifying three degrees of freedom for the orientation of said object by specifying a plurality of points on said spherical representation surface in a predetermined order;
a means for performing a calculation for rotating said object to the orientation defined by said specified three degrees of freedom; and a means for displaying, on said display means, said object after it is subjected to the rotation based on the results of said calculation.

**(2)** A graphic system as claimed in claim 1 further comprising
a means for displaying, on said display means, a semitransparent spherical representation surface having as a centre O a fixed point in said object being displayed, and enclosing said object;
a means for receiving data for three degrees of freedom by specification of a plurality of points on said spherical representation surface in accordance with a predetermined specifying method;
a means for determining a rotation axis OP from among said three degrees of freedom by performing a calculation based on said received data; and
a means for determining a rotation angle α about said axis OP from among said three degrees of freedom by performing a calculation based on said received data.

**(3)** A graphic system as claimed in claim 2 wherein
said input/output section includes a two-dimensional display screen and a means for indicating points on said display screen;
said image generating section includes a means for determining a fixed point in a three-dimensional figure being displayed on said display screen, and a means for generating a semitransparent spherical representation surface to be displayed on said display screen with said fixed point as its centre; and
said processing section includes a conversion-to-spherical-surface-coordinates means for converting two-dimensional coordinates on said semitransparent spherical representation surface that are indicated through said input/output section into spherical surface coordinates, a polar coordinates calculating means and axial rotation angle calculating means for determining three degrees of freedom for rotation based on said spherical surface coordinates by performing a calculation, and a projection converting means for determining the attitude of said figure after it is subjected to said rotation based on said three degrees of freedom.

**(4)** A graphic system as claimed in any preceding claim wherein
said input/output means further includes a means for displaying, on said display screen, a predetermined specifying method for indicating said points on said display screen.

**(5)** A graphic system as claimed in any preceding claim wherein
said input/output section further includes a means for changing over between a plurality of modes of operation;
said image generating section further includes a figure processing section for generating, in said image generation mode, said three-dimensional figure based on input data and a memory section for storing data of said three-dimensional figure, and determines, in said figure rotation mode, said fixed point in said three-dimensional figure based on said data for said three-dimensional figure.

**(6)** A graphic system as claimed in any preceding claim wherein said plurality of modes of operation includes an image generation mode and a figure rotation mode.

**(7)** A method of rotating an object in a three-dimensional space by specifying data for three degrees of freedom for orientation of the object displayed on a display means, characterized by the steps of displaying, on said display means, a semitransparent spherical representation surface enclosing said object being displayed;
inputting data for said three degrees of freedom for said orientation of said object by specifying a plurality of points on said spherical surface in accordance with a predetermined specifying method;
performing a calculation for rotating said object to said orientation defined by said three degrees of freedom; and
displaying, on said display means, said object after it is subjected to the rotation based on the results of said calculation.

**(8)** A method as claimed in claim 7 wherein said step of inputting said data for said three degrees of freedom for said orientation comprises the steps of
specifying two of said three degrees of freedom by successively specifying two points on said spherical representation surface; and
specifying the remaining one of said three degrees of freedom by specifying, after a lapse of a certain period, another two points on said spherical representation surface.

**(9)** A method as claimed in any of claims 7 or 8 wherein said step of inputting said data for said three degrees of freedom for said orientation comprises the steps of
specifying an axis OP for said rotation by specifying one point on said spherical representation surface; and
specifying a rotation angle α about said axis OP by specifying two points on said spherical representation surface.

**(10)** A method as claimed in any of claims 7, 8 or 9 wherein said step of inputting said data for said three degrees of freedom for said orientation comprises the steps of
displaying said predetermined specifying method on said display means; and
specifying said three degrees of freedom by interactive input in accordance with said specifying method.

**(11)** A method as claimed in any of claims 7, 8, 9 or 10 further comprising the steps of
determining a fixed point in said object being displayed;
generating and displaying a semitransparent spherical representation surface having said fixed point as the centre O and enclosing said object being displayed;
inputting data for determining a rotation axis OP from among said three degrees of freedom by specifying points on said spherical representation surface in accordance with a predetermined method, and inputting data for a rotation angle α about said axis OP from among said three degrees of freedom by specifying other points on said spherical representation surface; and
performing a calculation for rotating said object to the orientation defined by said three degrees of freedom that are determined by said input data.
